# EUROPEAN PATENT SPECIFICATION

(11) **EP 2 157 729 B1**
(45) Date of publication and mention of the grant of the patent: **01.10.2014**
(21) Application number: 08706598.3
(22) Date of filing: 31.01.2008
(51) Int. Cl.: H04L 12/14, H04M 15/00

(54) **SERVICE PROCESSING METHOD, APPARATUS OF CHARGING SYSTEM AND CHARGING SYSTEM**
DIENSTVERARBEITUNGSVERFAHREN, VORRICHTUNG EINES ABRECHNUNGSSYSTEMS UND ABRECHNUNGSSYSTEM
PROCÉDÉ DE TRAITEMENT DE SERVICE, APPAREIL DE SYSTÈME DE CHARGEMENT ET SYSTÈME DE CHARGEMENT

(30) Priority: 30.04.2007 CN 200710102024
(43) Date of publication of application: 24.02.2010
(73) Proprietor: Huawei Technologies Co., Ltd., Longgang District, Shenzhen Guangdong 518129 (CN)
(72) Inventor: DANG, Tiepeng, Shenzhen, Guangdong 518129 (CN)
(74) Representative: Pfenning, Meinig & Partner GbR
(86) International application number: PCT/CN2008/070221
(87) International publication number: WO 2008/131656

(56) References cited:
- WO-A1-98/21676
- CN-A- 1 744 645
- CN-A- 101 047 902
- US-A1- 2003 036 918
- US-A1- 2003 120 594
- US-B1- 7 085 360

## Description

### FIELD OF THE INVENTION

The present invention relates to billing of the telecommunications network, and more particularly, to a method and apparatus for service processing in a billing system and a billing system thereof.

### BACKGROUND

The billing system is a core system in the operation supporting field. It collects call records from devices, performs rating and generating a bill, as well as accomplishes inter-network settlement. The bill and settlement reports generated by the above operations determine the income of the operator, and are also the credence for ordinary customers to pay. Therefore, the accuracy and integrity of the operations are highly concerned. The related technique for ensuring that the bills are processed accurately and integrally is referred to as bill reconciliation.

Presently, the common domestic and overseas billing systems basically employ a single-point internal bill reconciliation technique to ensure the integrity of the essential processing steps. The critical points used generally in this industry include collecting, pre-processing, rating, settling, etc. These critical processes may check the content such as the processing record and error numbers before and after the processing, so as to create the reconciliation report.

The input for the collecting module is an original call record file sent from a device, and the output call record file after being pre-processed is a call detail record file, which is the input for the rating module. It is apparent that the inputs for the various modules are different. Meanwhile, the input/output call record files of each module are not corresponding to each other one by one. For example, when a user sends an intra-network (the receiving side being a client of the same operator) short message, the original call record file collected from the device includes 3 call records, one is the sending record generated by the switching center device immediately after the sending from the user, one is the receiving data record generated by the switching center, and the other one is a record of this message from the short message service (SMS) center after the message is received by the receiver upon powering-up. The above original call record files are differently defined in formats by various device vendors, and have different content, which may contain much redundant information of device-level or network signaling sometimes. The primary step for billing is to convert the original call record file into a call detail record file in a uniformed format and with predetermined content by collecting, for rating and processing by the subsequent rating module and billing module in a unified flow. The 3 original call record files of the intra-network message are merged into 2 call detail record files after the pre-processing of collecting, and are placed under the sending and receiving sides, respectively. Then the relationship between the original call record files and the call detail record files is multi-to-multi. If it is an inter-network (the sending side and the receiving side belong to different operators) short message, then the switching center generates an original call record file, the SMS center generates an original call record file, and the short message gateway also generates an original call record file. The 3 total original call record files are collected and merged into only one call detail record file, which is retained and placed under the sending side for subsequent rating. For a further example, some switches would partition a long-time call into multiple call records that will come in different original call record files. Subsequently, such call records are placed in a waiting queue by the pre-processing module until the last original call record is received, and then these original call records will be combined into a call detail record file to output. In this case, the original call record files and the call detail record file are far apart in time, since after one original call record file is collected by the collecting module, part of the records are processed soon and put into a current batch of output call record files of this module, while part of the records need to be combined with a subsequent original call record(s). In other words, the records of an original call record file may be distributed in multiple call detail record files after pre-processing, and the total processing time exceeds a day, wherein several call detail record files during this time may contain the records generated from this original call record file.

The inputs for the collecting module are original call record files, and the outputs are renamed call detail record files classified by service types, with the number of call records, format, ranking therein having been changed. The rating module receives these call record files classified by service types, and generates rated call detail record files classified by users of different payment periods, with the ranking, format, and the number of call records therein having been changed essentially as compared with that received. The billing module further processes the call record files output from the rating module.

There are some prior arts relating to billing method. For example, US patent application No. 2003120594A1 discloses a data structure for exchanging billing information. US patent No. 7085360B1 relates to a method for auditing billing records in a telecommunication system. US patent application No. 2003036918A1 proposes a system for validating service bills.

The prior art reconciliation is mainly based on the current call record processing flow, and performs reconciliation in the major processing modules (the collecting module, rating module, billing module, and settling module) by comparing the statistic results before and after the processing of each processing module.

As is apparent from the prior art, since the call record files processed by the various modules are different, and the call record files in different stages are not corresponding to each other one by one, it is impossible for the user to locate the initial processing process if a subsequent processing module is in error during the call record reconciliation. In other words, the user may not track the call record files effectively during the call record reconciliation, while such trackability is significant for the billing system.

### SUMMARY

In order to solve the problem that the user may not effectively track the call record files during call record reconciliation, a method for service processing in a billing system is provided according to one embodiment of the present invention. The method includes:
receiving an original call record file;
adding an original call record file identification into each call record of the original call record file and processing the original call record file added with the original call record file identification to generate a subsequent call record file wherein each call record has the original call record file identification during the subsequent processing;
totalizing, by each processing module, the call records in the received and processed call record file by totalizing the original call record file identification to specify reconciliation parameters of the call records having the original call record file identification within the processing module;
reconciling the processing steps for the call record with the original call record file identification; and
tracking the call record file by the original call record file identification when the reconciliation is abnormal;
   wherein the processing the original call record file added with the original call record file identification comprises:
   collecting the original call record file, and performing one of the following processing steps or a combination thereof:
   rating or charging the subsequent call record file;
   billing the subsequent call record file; and
   settling the subsequent call record file;
   wherein the reconciling the processing steps for the call record file with the original call record file identification comprises:
   extracting the reconciliation parameters of the call record file before and after each of the processing steps, and reconciling between and within the processing steps to calculate global reconciliation indices indicating whether the processing steps are balanced and normal according to the reconciliation parameters and arithmetic formulas.

Moreover, an apparatus for service processing in a billing system is provided according to one embodiment of the present invention. The apparatus includes:
a receiving module, configured to receive an original call record file ;
an identification module, configured to add an original call record file identification into the original call record file, the identification module comprising an identification sub-module, configured to add the original call record file identification into each call record of the original call record file;
a module, configured to process an input call record file with the identification and configured to output a subsequent call record file with the original call record file identification, wherein each call record has the original call record file identification during the subsequent processing, and to totalize the call records in the received and processed call record file by totalizing the original call record file identification reconciliation parameters of the call records having the original call record file identification;
a reconciliation module, configured to reconcile input and output of the processing module; and
a track module, configured to track the call record file with the original call record file identification if the reconciliation is abnormal;
   wherein the processing module comprises:
   a collecting module, configured to collect the original call record file and generate the subsequent call record file;
   the processing module further comprises one or a combination of:
      a rating module, configured to rate the subsequent call record file;
      a billing module, configured to receive and bill the rated call record file; and
      a settling module coupled to the collecting module, the rating module and the billing module, configured to settle the subsequent call record file output from the processing modules;
      and the reconciliation module comprises:
      a reconciliation sub-module, configured to extract the reconciliation parameters of input and output call record files of the processing modules, and perform reconciliation between and within the processing modules to calculate global reconciliation indices indicating whether the processing steps in the processing modules are balanced and normal according to the reconciliation parameters and arithmetic formulas.

Furthermore, a billing system is provided according to one embodiment of the present invention. The billing system includes:
a receiving module, configured to receive an original call record file;
a collecting module, configured to collect the original call record file and generate a subsequent call record file;
a rating module, configured to rate the subsequent call record file;
a billing module, configured to receive the rated call record file and bill the subsequent call record file;
a settling module, configured to settle the subsequent call record file output from each of the processing modules;
an identification module, configured to add an original call record file identification into the original call record file collected by the collecting module, the identification module comprising an identification sub-module, configured to add the original call record file identification to each call record of the original call record file;
a reconciliation module, configured to reconcile inputs and outputs of the collecting module, the rating module, the billing module and the settling module; and
a track module, configured to track the call record file with the original call record file identification.

As can be seen from the embodiments above provided by the present invention, by adding identification into the original call record file and generating the subsequent call record file with the identification, the call record files may be effectively tracked by the unified identification. Then when the processing is in fault, the position of the fault may be located timely and accurately, thereby achieving the effective fault location.

### BRIEF DESCRIPTION OF THE DRAWINGS

FIG. 1 is a schematic diagram for generating file identification in a method provided in an embodiment of the present invention;
FIG. 2 is a schematic diagram of reconciliation point distribution in accordance with an embodiment of the present invention;
FIG. 3 is a method flowchart in accordance with a first embodiment of the present invention;
FIG. 4 is a flowchart for generating a call record in a method provided in an embodiment of the present invention;
FIG. 5 is a schematic block diagram of an apparatus for service processing in a billing system in accordance with a second embodiment of the present invention; and
FIG. 6 is a schematic block diagram of a billing system in accordance with a third embodiment of the present invention.

### DETAILED DESCRIPTION

In an embodiment of the present invention, the original call record file or the subsequent call record file generated therefrom may be selected as a dimension for reconciliation. As a preferred scheme, this embodiment selects the collected original call record file that is the input of the billing system as the dimension for reconciliation. With the original call record file identification (e.g., the original call record filename or the corresponding ID of the original call record filename, etc., which is similar hereinafter) as an index, the original filename may be "device name" + "file collecting date"."file type". For example, MSC012005103000.dat represents an original call record file generated from a switching device (MSC01) at 10: 30, 2005, and SMSC022005102000.dat represents an original call record file generated by the short message service center (SMSC02) at 10: 20, 2005. With the corresponding ID of the original call record filename, a corresponding ID may be written, for example, the flag 2342342342 represents that it comes from the MSC012005103000.dat file, and 23542569023 represents that it comes from the SMSC022005102000.dat. The ultimate purpose is that each record of the original call record file and each call detail record file may correspond to the original call record file identification. The original call record file identification is added into each call record of the original call record file when first processed (generally by the call record pre-processing function). The initial original call record file identification information is retained in the records during the subsequent billing and rating processes, regardless of the variation of the filename, the ranking of the records, and the combination, partition, or discarding of the call record files. Such information is used as statistic dimension by the subsequent modules, and the statistic information is sent to a unified reconciliation functional module for summarizing, thereby providing a uniformed monitoring platform for the operator.

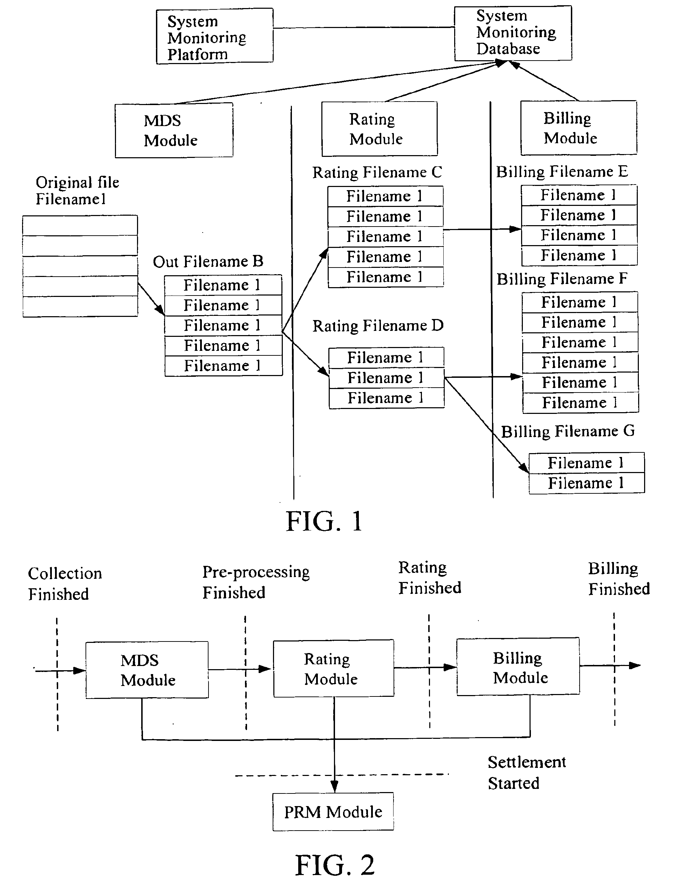

As shown in FIG. 1, the whole billing system includes multiple processing modules. FIG. 1 illustrates a collecting module (MDS module, for collecting and pre-processing the original call record file), a rating module (for rating the subsequent call record file), and a billing module (for billing the subsequent call record file). The above modules are sequential in a service flow, wherein the overall inputs are the original call record files collected by the collecting module. These files may come from a device of a fixed network or a mobile network, or a settling center.

After the collecting module pre-processes a collected original call record file named "filenamel", it outputs one or more processed subsequent call record file OutfilenameB including a plurality of call records, with each record being added with a field of original call record file identification information, the content of which may be information of the original call record filename (e.g., MSC012005103000.dat), or the corresponding file ID information.

Although the output filename is changing after the processing by the subsequent rating module and the billing module, the call records in the output subsequent call record files preserve the original call record file identification information.

Eventually, each module totalizes the original call record file identification information to specify the reconciliation parameters of the call records having the identification within the module, such as the success number, error number, merge and partition number, etc., and sends these reconciliation parameters to the system monitoring database.

The operator learns and views the reconciliation parameters in the database gathered from the various modules in reconciliation functional interface of the system monitoring platform, and calculates whether the processing is normal according to arithmetic formula automatically. If the processing is abnormal, it alarms after a period of the time (which might be configured by the user, mainly considering the network delay of call record processing), alerting the user that the processing for the call records is abnormal. Then, the call record file may be tracked by the file identification.

As shown in FIG. 2, this embodiment specifies reasonable reconciliation points in advance, each of which has two systems on both sides for outputting unified reconciliation information. FIG. 2 has 5 reconciliation points as follows:
1. Collection Finished ;
2. Pre-processing Finished ;
3. Rating Finished ;
4. Billing Finished ; and
5. Settlement Started.

On both sides of each point, the collecting module (MDS module), the rating module, the billing module and the settling module (PRM module, for performing settlement on the subsequent call record files) each totalizes the call records in its received and processed call record file by the dimension of the unified original call record file, and sends the result to the system monitoring database. The settlement operation is an operation with multiple inlets, since it receives the call records in the call record files from the various modules.

Finally, the number of call records before processing of each module and the number of processed call records sent to the next module are obtained. The content required to be sent to the monitoring database from each module is illustrated by an example of the MDS module. The data parameters in the content sent from the MDS module to the monitoring database for call record reconciliation are shown in Table 1.

**Table 1**

| Variable | Description |
|---|---|
| FileName | The original call record filename collected by the system, used as an index |

| Collect Time | The time of collection |
|---|---|
| MDSInNUM | Total number of records in the file received by the MDS module |
| MDS filter NUM | Number of Records in the file filtered out by the MDS module |
| MDS merge NUM | Number of lost Records in the file when merged by the MDS module |
| MDS 2 Rating NUM | Number of records generated from the file and sent to the rating module |
| MDS 2 PRM NUM | Number of records generated from the file and sent to the PRM module |
| MDS balancing | Processing balancing flag of the MDS module, the arithmetic formula is: MDSInNum - (MDSfilter NUM + MDSmerg NUM +MDS2Rating NUM + MDS2PRM NUM), where being 0 represents that the processing is normal |

Each module is required to send the received reconciliation parameters totalized by itself (such as the total number of received records, the number of filtered out records (abandoned in initiative or in error), the number of merged records (including partitioned)) to the next module (the downstream processing modules in the table above are the rating module and the PRM module). These reconciliation parameters are accumulated by an index of the original call record filename received by the MDS module. In other words, each original call record filename corresponds to a record, and the records not processed in this period are not submitted.

The implementations of other modules are similar, wherein the specific parameter values differ due to the different service features and downstream modules, and will not be repeated here.

Eventually, a complete set of system monitoring reconciliation parameters is obtained, as well as the processing situation of each original call record file in the system, thus whether the processing is abnormal may be concluded.

With respect to the reconciliation points mentioned above, the system monitoring module performs reconciliation calculations between and within the various processing modules according to the following formulae, thereby calculating some critical global reconciliation indices. The implementation in this example is as follows, including 6 global reconciliation indices:
MDS&Rating balancing flag: indicating whether the sending of the MDS module is equal to the receiving of the rating module, wherein the arithmetic formula is MDS2Rating [Note: number of call records sent from the MDS module to the rating module] - RatingInNum [Note: number of call records received by the rating module], where being 0 represents that the processing is normal, otherwise the processing is abnormal;
PRMReceived balancing flag: indicating whether the number of records sent from the MDS module and the rating module to the PRM module is equal to that received by the PRM module, wherein the arithmetic formula is PRMInNum [Note: number of call records received by the PRM module] - (MDS2PRM [Note: number of call records sent form the MDS module to the PRM module] + Rating2PRM [Note: number of call records sent from the rating module to the PRM module]), where being 0 represents that the processing is normal, otherwise the processing is abnormal;
Rating&Billing balancing flag: indicating whether the number of call records sent from the rating module to the billing module and that received by the billing module is balanced, wherein the arithmetic formula is Rating2Billing [Note: number of call records sent from the rating module to the billing module] - BillingInNum [Note: number of call records received by the billing module], where being 0 represents that the processing is normal, otherwise the processing is abnormal;
MDS balancing flag: indicating whether the processing within the MDS module is balanced, wherein the arithmetic formula is MDSInNum [Note: number of call records received by the MDS module] - (MDSfilter NUM [Note: number of call records filtered out by the MDS module in initiative] + MDSmerg NUM [Note: number of call records merged by the MDS module] +MDS2Rating NUM [Note: number of call records sent from the MDS module to the rating module] + MDS2PRM NUM [Note: number of call records sent from the MDS module to the PRM module]), where being 0 represents that the processing is normal, otherwise the processing is abnormal;
Rating balancing flag: indicating whether the processing within the rating module is balanced, wherein the arithmetic formula is RatingInNum [Note: number of call records received by the rating module]- (Rating filter NUM[Note: number of call records filtered out by the rating module in initiative] + Rating merge NUM [Note: number of call records merged by the rating module] + Rating to Billing NUM [Note: number of call records sent from the rating module to the billing module] + Rating to PRM NUM [Note: number of call records sent from the rating module to the PRM module]), where being 0 represents that the processing is normal, otherwise the processing is abnormal; and
PRM balancing flag: indicating whether the processing within the PRM module is balanced, wherein the arithmetic formula is PRMInNum [Note: number of call records received by the PRM module] - (PRMfiltered [Note: number of call records filtered out by the PRM module in initiative] + PRMmerged [Note: number of call records merged by the PRM module] + PRMOutNum[Note: number of call records output form the PRM module]), where being 0 represents that the processing is normal, otherwise the processing is abnormal.

All the reconciliation parameters of the above reconciliation flags totalize the processing situations of the call record file between and within the various modules by the dimension of the original call record filename collected by the system. The forgoing is only a preferred scheme, and different reconciliation points and different reconciliation indices may be set as desired by the billing system, which will not be repeated here.

Eventually, the condition for the normal processing within the system for the original call record file collected by the system is that all the balancing flags are normal, i.e.:
The final end-to-end reconciliation flag bit = MDS&Rating balancing flag = PRMReceived balancing flag = Rating&Billing balancing flag = MDS balancing flag = Rating balancing flag = PRM balancing flag = 0.

The final end-to-end reconciliation flag bit equal to 0 represents that the end-to-end processing of the call record file in the whole the system is without abnormal. If it cannot be balanced after a period of time (from the completion of collection, mainly considering the system processing delay), it represents that the reconciliation is abnormal, and it should alarm to alert the processing.

The above scheme also has other function. Since the user may see the error, emerged, and success numbers of each collect ed original call record file in the various modules of the system, the specific module may be located quickly. Second, since the system already has the fundamental data, it may totalize completely according to the collection points (the call record collection device), analyze the call record error probability and reasons, thereby optimizing the network. Further, the classified totaling by the type of the collected call record files may give the service traffic and fee features of different services.

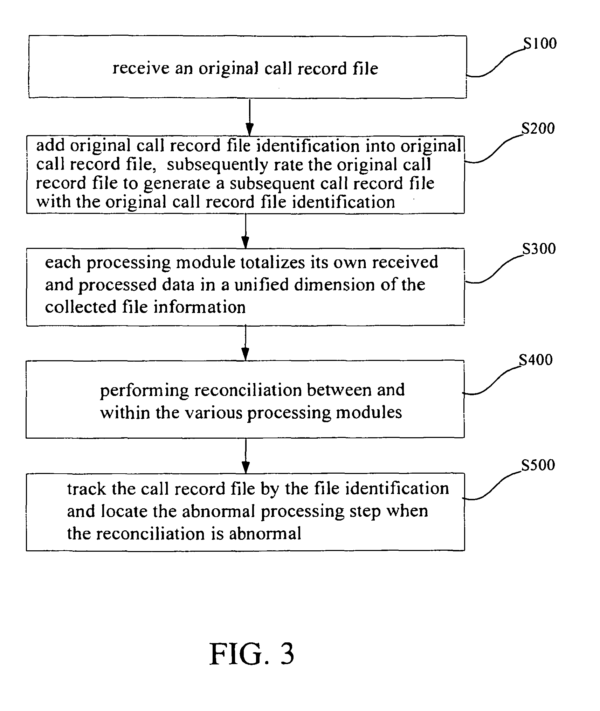

The first embodiment provided by the present invention is a method for service processing in a billing system. The method flowchart of the first embodiment is as shown in FIG. 3.

For example, a mobile user with the number of AAAAAAAAAAA sent two short messages in a short time period (e.g., several seconds), one for a mobile user with the number of BBBBBBBBBBB within the same network, and the other is for a mobile user with the number of CCCCCCCCCCC of another operator.

Step S100: An original call record file is received.

What is received at the collecting module are original call record files, which are generated by devices such as the switching center, and each is combined and encoded according to the format defined by its own device. The original call record file is the input of the whole billing system.

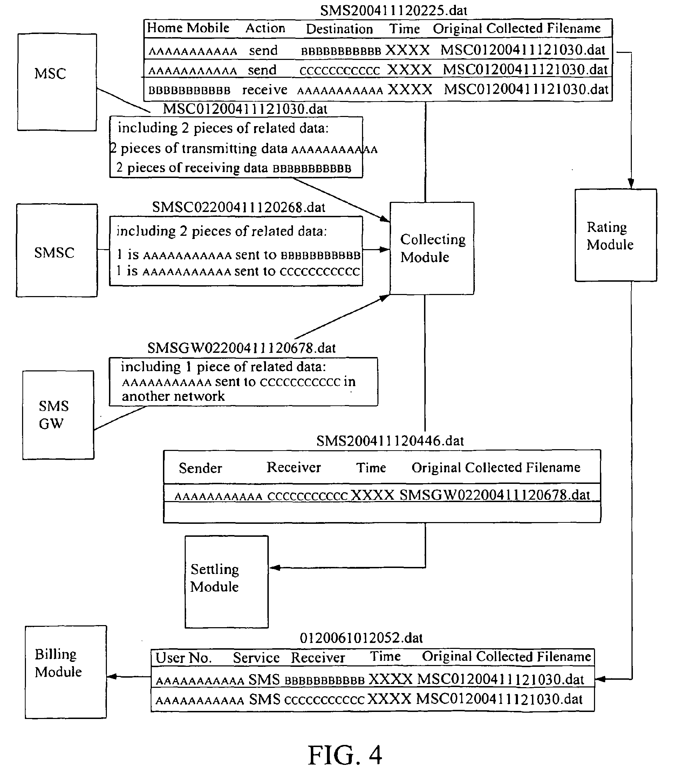

Step S200: An original call record file identification is added into an original call record file, the original call record file added with the original call record file identification is subsequently rated to generate a subsequent call record file with the original call record file identification. The specific process is as shown in FIG. 4.

The two short messages in the above example will distribute in three original call record files, with the total of 6 call records. The original call record file of the switching center, MSC01200411121030.dat, records two sending records of the mobile user with the number of AAAAAAAAAAA, one receiving record of the mobile user with the number of BBBBBBBBBBB, with the total of three records. The original call record file of the SMS center, SMSC02200411120268.dat, records the processing records of the two messages respectively sent from the mobile user with the number of AAAAAAAAAAA to the mobile user with the number of BBBBBBBBBBB and sent from the mobile user with the number of AAAAAAAAAAA to the mobile user with the number of CCCCCCCCCCC, and the original call record file of the short message gateway, SMSGW02200411120678.dat, records one processing record in sending to the mobile user with the number of CCCCCCCCCCC outside the network. The collected 6 records distribute in the 3 original call record files, and are the original call records.

After the processing of the collecting module, the records are merged into 4 records, 3 call detail record (call detail record) files of which are sent to the rating module for processing. Then the call records are classified according to the services, wherein all the short messages in a batch of call record files are in the same call record file SMS200411120225.dat. If there are calls, all the calls are in another call record file; and if the Internet is connected, the Internet connecting data is in one call record file.

The other record is sent to the settling module to generate a call record file SMS200411120446.dat, for fee settlement between networks. From then on, each call record in each call record file has the original call record filename, wherein each call record in SMS200411120225.dat has the original call record filename MSC01200411121030.dat, and each call record in SMS200411120446.dat has the original call record filename SMSGW02200411120678.dat, for tracking and calculating the sources of the records.

The call record number of the original call record of the SMS center is merged in the processing of the collecting module in this example, losing 2 records. Such planed losing can be totalized and considered as normal. The abnormal situation of this scheme is mainly with respect to the uncounted, abnormal losing that is not planed. Such losing will be reflected directly on the unbalance of the subsequent reconciliation calculation formulae.

After the processing of the rating module, the call record files are classified according to different payment periods (which determine the billing and bill posting date). For the users having the same payment period in the same batch of call record files, all the service usage records are in the same call record file. Then, data of all calls, short messages, and Internet connections of the mobile user with the number of AAAAAAAAAAA are in the same file 0120061012052.dat, for providing to the billing module for billing, remaining only two records.

As can be seen from the above example, the call record in the embodiment of the present invention is a general record, which may be a record generated by the billing system during calling between users, or a record generated by the billing system during messaging between users, as well as a record generated by the system during connecting to the Internet.

Step S300: Each processing module totalizes its own received and processed data by a unified dimension of the collected file information.

As may be derived from the above process, the data parameters in the content sent from the MDS module to the monitoring database for call record reconciliation are shown in Table 2.

**Table 2**

| Variable | Description |
|---|---|
| FileName | MSC01200411121030.dat, SMSC02200411120268.dat, SMSGW02200411120678.dat |
| Collect Time | The time of collection |
| MDSInNUM | Total number of records in the file received by the MDS module: 6 |
| MDS filter NUM | Number of records in the file filtered out by the MDS module: 0 |
| MDS merge NUM | Number of lost records in the file when merged by the MDS module: 2 |
| MDS 2 Rating NUM | Number of records generated from the file and sent to the rating module: 3 |
| MDS 2 PRM NUM | Number of records generated from the file and sent to the PRM module: 1 |

The implementations of other modules are similar, wherein the specific parameter values differ due to the different service features and downstream modules, which will not be repeated here.

Step S400: Reconciliation is performed between and within the various processing modules.

MDS&Rating balancing flag: MDSInNum - (MDSfilter NUM + MDSmerg NUM +MDS2Rating NUM + MDS2PRM NUM), resulting in 0 by substituting the data in the table above indicates that the processing is normal. The other 5 global reconciliation indices, PRMReceived balancing flag, Rating&Billing balancing flag, MDS balancing flag, Rating balancing flag and PRM balancing flag, all being 0 represents that the processing is normal.

Step S500: The system monitoring module may obtain a complete set of system monitoring data, obtain the processing situation of each original call record file in the system, and thus concludes whether there exists abnormality. Once an abnormity is present, the call record files may be tracked by the original call record filename, so as to locate the abnormal processing step.

In the whole process above, the number of records and the call record filenames being processed are continuously changing. The conventional approaches totalize whether the processing within each module is correct, but is impossible to know which original call record file a certain record comes from during a later stage, nor to confirm whether the original call record file has been completely processed and whether there is missing or repeated processing. While in the scheme of this embodiment, due to the addition of the necessary identification information, the unified statistic dimension and the architecture, the processing progress of the original call record file in each module may be learned in real-rime, and the system may alarm in initiative if the reconciliation of some original call record file can not be balanced for a long time (it may be set, generally to 24 hours). The system monitoring interface may track all the call record files within a time period through the original call record filename, or may track directly a specified call record file or the files of some service type. The normal processing of all files indicates the normal operation of the billing system.

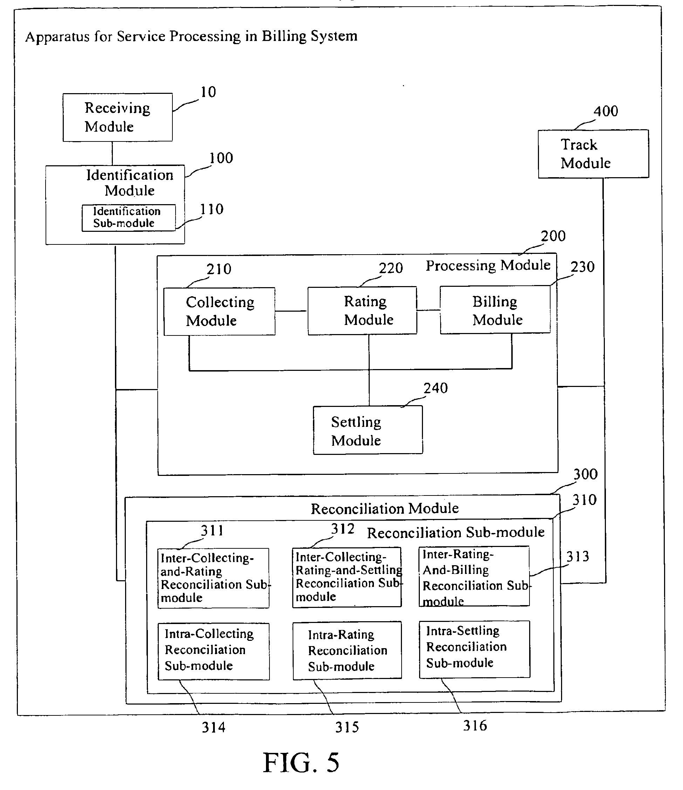

The second embodiment provided by the present invention is an apparatus for service processing in a billing system, the structure of which is shown in FIG. 5. The apparatus includes:
a receiving module 10, configured to receive an original call record file ;
an identification module 100 coupled to the receiving module 10, configured to add identification into an original call record file; for example, add the original call record file identification into the call records of the original call record file, wherein the identification information does not change during the subsequent processing, thus the subsequent generated call detail record files may correspond to the original call record file identification;
a processing module 200 coupled to the identification module 100, configured to process the input call record file added with the identification according to the specific requirement, and output the subsequent call record file with the identification;
a reconciliation module 300 coupled to the processing module 200, configured to reconcile the input and output of the processing module, detect whether there is an error in the processing process of the processing module, and reconcile the various steps of the processing module as well as between these steps; and
a track module 400 coupled to the reconciliation module 300, configured to track the call record file with the identification. When it is required to locate the fault, the track module 400 performs tracking according to the identification and locates the specific processing step.

The identification module 100 includes:
an identification sub-module 110, configured to add the identification to the call records of an original call record file.

The processing module 200 includes:
a collecting module 210, configured to collect the original call record file, and the processing module further includes one of the following modules or the combination thereof:
   a rating module 220 coupled to the collecting module 210, configured to rate the subsequent call record file;
   a billing module 230 coupled to the rating module 220, configured to bill the subsequent call record file; and
   a settling module 240 coupled to the collecting module 210, the rating module 220 and the billing module 230, configured to settle the subsequent call record file.

The reconciliation module 300 includes:
a reconciliation sub-module 310, configured to extract the reconciliation parameters of the input and output call record files of the various processing modules, and perform reconciliation between and within the processing modules.

The reconciliation sub-module 310 includes:
an inter-collecting-and-rating reconciliation sub-module 311, configured to perform reconciliation between the collecting module 210 and the rating module 220;
an inter-collecting-rating-and-settling reconciliation sub-module 312, configured to perform reconciliation between the collecting module 210, the rating module 220 and the settling module 240;
an inter-rating-and-billing reconciliation sub-module 313, configured to perform reconciliation between the rating module 220 and the billing module 230;
an intra-collecting reconciliation sub-module 314, configured to perform reconciliation within the collecting module 210;
an intra-rating reconciliation sub-module 315, configured to perform reconciliation within the rating module 220; and
a intra-settling reconciliation sub-module 316, configured to perform reconciliation within the settling module 240.

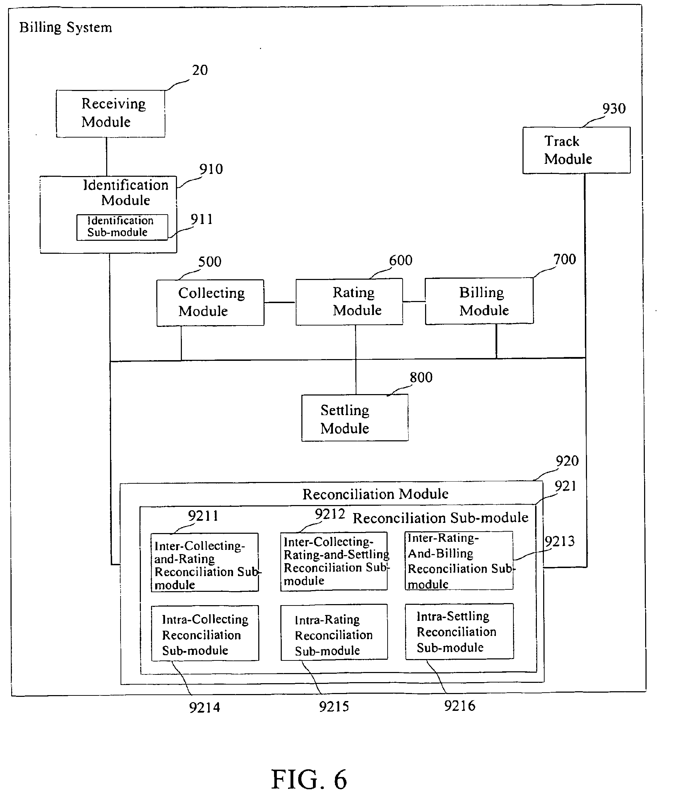

The third embodiment of the present invention provides a billing system, the structure of which is as shown in FIG. 6. The system includes:
a receiving module 20, configured to receive an original call record file ;
a collecting module 500 coupled to the receiving module 20, configured to collect an original call record file and generate a subsequent call record file;
a rating module 600 coupled to the collecting module 500, configured to rate the subsequent call record file;
a billing module 700 coupled to the rating module 600, configured to bill the subsequent call record file; and
a settling module 800 coupled to the collecting module 500, the rating module 600 and the billing module 700, configured to settle the subsequent call record file.

Based on the above, the billing system is added with the following functional modules:
an identification module 910 coupled to the collecting module 500, configured to add identification into an original call record file collected by the collecting module;
a reconciliation module 920 coupled to the collecting module 500, the rating module 600, the billing module 700 and the settling module 800, configured to reconcile the input and output of the processing modules; and
a track module 930 coupled to the collecting module 500, the rating module 600, the billing module 700, the settling module 800 and the reconciliation module 920, configured to track the call record files with the identification.

Further, the identification module 910 includes:
an identification sub-module 911, configured to add the identification into the call records of the original call record file.

Further, the reconciliation module 920 includes:
a reconciliation sub-module 921, configured to extract the reconciliation parameters of the input and output call record files of the various processing modules, and perform reconciliation between and within the processing modules.

Further, the reconciliation sub-module 921 includes:
an inter-collecting-and-rating reconciliation sub module 9211, configured to perform reconciliation between the collecting module 500 and the rating module 600;
an inter-collecting-rating-and-settling reconciliation sub-module 9212, configured to perform reconciliation between the collecting module 500, the rating module 600 and the settling module 800;
an inter-rating-and-billing reconciliation sub-module 9213, configured to perform reconciliation between the rating module 600 and the billing module 700;
an intra-collecting reconciliation sub-module 9114, configured to perform reconciliation within the collecting module 500;
an intra-rating reconciliation sub-module 9215, configured to perform reconciliation within the rating module 600; and
an intra-settling reconciliation sub-module 9216, configured to perform reconciliation within the settling module 800.

As can be seen from the above embodiments provided by the present invention, by adding identification into the original call record file and generating the subsequent call record file with the identification, the call record files may be effectively tracked by the unified identification.

In the above embodiments, since the error, emerged, and success numbers of each collected original call record file in the various modules of the system may be seen, the specific module may be located quickly.

In addition, since the system already has the fundamental data, it may totalize completely according to the collection points (the call record collection device), analyze the call record error probability and reasons, thereby optimizing the network. Further, the classified totaling by the type of the collected call record files may give the service traffic and fee features of different services.

All or part of the technical schemes provided by the above embodiments may be implemented by software programming, the software programs of which are stored in the readable storage medium, e.g., the hard disk, optical disk or floppy disk in a computer.

It is apparent that various modifications and variations may be made to the present invention by those skilled in the art without departing from the scope of the present invention. Thus, such modifications and variations of the present invention that fall within the scope of the claims of the present invention and its equivalent are intended to be within the present invention.

## Claims

1. A method for service processing in a billing system, comprising:
receiving an original call record file (S100);
adding an original call record file identification into each call record of the original call record file (S200)and processing the original call record file added with the original call record file identification to generate a subsequent call record file, wherein each call record has the original call record file identification during the subsequent processing;
totalizing, by each processing module, the call records in the received and processed call record file by totalizing the original call record file identification to specify reconciliation parameters of the call records having the original call record file identification within the processing module (S300);
reconciling the processing steps for the call record file with the original call record file identification (S400); and
tracking the call record file by the original call record file identification when the reconciliation is abnormal (S500);
wherein the processing the original call record file added with the original call record file identification comprises:
collecting the original call record file, and performing one of the following processing steps or a combination thereof:
rating or charging the subsequent call record file;
billing the subsequent call record file; and
settling the subsequent call record file;
wherein the reconciling the processing steps for the call record file with the original call record file identification comprises:
extracting the reconciliation parameters of the call record file before and after each of the processing steps, and reconciling between and within the processing steps to calculate global reconciliation indices indicating whether the processing steps are balanced and normal according to the reconciliation parameters and arithmetic formulas.

2. The method of claim 1, **characterized in that**, the extracting the reconciliation parameters of the call record file before and after each of the processing steps, and reconciling between and within the processing steps comprise:
reconciling between a collecting step and a rating step;
reconciling between the collecting step and a settling step and between the rating step and the settling step;
reconciling between the rating step and the billing step;
reconciling the collecting step;
reconciling the rating step; and
reconciling the settling step.

3. The method of claim 1, **characterized in** further comprising:
alarming and/or performing a fault analysis and fault location when the reconciliation is abnormal.

4. The method of claim 1, **characterized in that**, the original call record file identification comprises:
an original call record filename or ID of the original call record filename.

5. An apparatus for service processing in a billing system, comprising:
a receiving module (10), configured to receive an original call record file;
an identification module (100), configured to add an original call record file identification into the original call record file, the identification module comprising an identification sub-module (110), configured to add the original call record file identification into each call record of the original call record file;
a processing module (200), configured to process the input call record file with the identification and output a subsequent call record file with the original call record file identification, wherein each call record has the original call record file identification during the subsequent processing, and to totalize the call records in the received and processed call record file by totalizing the original call record file identification to specify reconciliation parameters of the call records having the original call record file identification;
a reconciliation module (300), configured to reconcile inputs and outputs of the processing module; and
a track module (400), configured to track the call record file with the original call record file identification when the reconciliation is abnormal;
wherein the processing module comprises:
a collecting module (210), configured to collect the original call record file and generate the subsequent call record file;
the processing module (200) further comprises one or a combination of:
a rating module (220), configured to rate the subsequent call record file;
a billing module (230), configured to receive and bill the rated call record file; and
a settling module (240) coupled to the collecting module, the rating module and the billing module, configured to settle the subsequent call record file output from the processing modules;
and the reconciliation module (300) comprises:
a reconciliation sub-module (310), configured to extract the reconciliation parameters of input and output call record files of the processing modules, and perform reconciliation between and within the processing modules to calculate global reconciliation indices indicating whether the processing steps in the processing modules are balanced and normal according to the reconciliation parameters and arithmetic formulas.

6. The apparatus of claim 5, **characterized in that**, the reconciliation sub-module (310) comprises:
an inter-collecting-and-rating reconciliation sub-module (311), configured to perform reconciliation between the collecting module (210) and the rating module (220);
an inter-collecting-rating-and-settling reconciliation sub-module (312), configured to perform reconciliation between the collecting module (210) and the settling module, and perform reconciliation between the rating module and the settling module (240);
an inter-rating-and-billing reconciliation sub-module (313), configured to perform reconciliation between the rating module (220) and the billing module (230);
an intra-collecting reconciliation sub-module(314), configured to perform reconciliation within the collecting module(210);
an intra-rating reconciliation sub-module(315), configured to perform reconciliation within the rating module (220); and
an intra-settling reconciliation sub-module(316), configured to perform reconciliation within the settling module (240).

7. A billing system, comprising an apparatus of claim 5, and further comprising:
a collecting module (500), configured to collect the original call record file and generate a subsequent call record file;
a rating module (600), configured to rate the subsequent call record file;
a billing module (700), configured to receive the rated call record file and bill the subsequent call record file;
a settling module (800), configured to settle the subsequent call record file output from each of the processing modules.

8. The system of claim 7, **characterized in that**, the reconciliation module (920) comprises:
a reconciliation sub-module (921), configured to extract reconciliation parameters of input and output call record files of the processing modules, and perform reconciliation between and within the processing modules.

9. The system of claim 8, **characterized in that**, the reconciliation sub-module (921) comprises:
an inter-collecting-and-rating reconciliation sub-module (9211), configured to perform reconciliation between the collecting module and the rating module;
an inter-collecting-rating-and-settling reconciliation sub-module (9212), configured to perform reconciliation between the collecting module and the settling module, and perform reconciliation between the rating module and the settling module;
an inter-rating-and-billing reconciliation sub-module (9213), configured to perform reconciliation between the rating module and the billing module;
an intra-collecting reconciliation sub-module (9214), configured to perform reconciliation within the collecting module;
an intra-rating reconciliation sub-module (9215), configured to perform reconciliation within the rating module; and
an intra-settling reconciliation sub-module (9216), configured to perform reconciliation within the settling module.

10. A computer-readable medium comprising computer-executable instructions that, when executed, perform acts, comprising:
receiving an original call record file (S100);
adding an original call record file identification into each call record of the original call record file (S200) and processing the original call record file added with the original call record file identification to generate a subsequent call record file wherein each call record has the original call record file identification during the subsequent processing;
totalizing, by each processing module, the call records in the received and processed call record file by totalizing the original call record file identification to specify reconciliation parameters of the call records having the original call record file identification within the processing module (S300);
reconciling the processing steps for the call record file with the original call record file identification (S400); and
tracking the call record file by the original call record file identification when the reconciliation is abnormal (S500);
wherein the processing the original call record file added with the original call record file identification comprises:
collecting the original call record file, and performing one of the following processing steps or a combination thereof:
rating or charging the subsequent call record file;
billing the subsequent call record file; and
settling the subsequent call record file;
wherein the reconciling the processing steps for the call record file with the original call record file identification comprises:
extracting the reconciliation parameters of the call record file before and after each of the processing steps, and reconciling between and within the processing steps to calculate global reconciliation indices indicating whether the processing steps are balanced and normal according to the reconciliation parameters and arithmetic formulas.

## Patentansprüche

1. Verfahren zur Dienstverarbeitung in einem Gebührenabrechnungssystem, wobei das Verfahren Folgendes umfasst:
Empfangen einer Originalverbindungsdatensatzdatei (S 100);
Hinzufügen einer Originalverbindungsdatensatzdateikennung in jeden Verbindungsdatensatz der Originalverbindungsdatensatzdatei (S200) und Verarbeiten der Originalverbindungsdatensatzdatei, der die Originalverbindungsdatensatzdateikennung hinzugefügt ist, um eine Folgeverbindungsdatensatzdatei zu erzeugen, wobei jeder Verbindungsdatensatz während der nachfolgenden Verarbeitung die Originalverbindungsdatensatzdateikennung aufweist;
Zusammenrechnen durch jedes Verarbeitungsmodul der Verbindungsdatensätze in der empfangenen und verarbeiteten Verbindungsdatensatzdatei durch Zusammenrechnen der Originalverbindungsdatensatzdateikennung, um Abgleichparameter der Verbindungsdatensätze, die die Originalverbindungsdatensatzdateikennung aufweisen, innerhalb des Verarbeitungsmoduls (S300) zu spezifizieren;
Abgleichen der Verarbeitungsschritte für die Verbindungsdatensatzdatei mit der Originalverbindungsdatensatzdateikennung (S400); und
Verfolgen der Verbindungsdatensatzdatei durch die Originalverbindungsdatensatzdateikennung, wenn der Abgleich anomal ist (S500);
wobei das Verarbeiten der Originalverbindungsdatensatzdatei, der die Originalverbindungsdatensatzdateikennung hinzugefügt ist, Folgendes umfasst:
Erfassen der Originalverbindungsdatensatzdatei und Ausführen eines der folgenden Verarbeitungsschritte oder einer Kombination davon:
Tarifierung oder Gebührenerfassung der Folgeverbindungsdatensatzdatei;
Gebührenabrechnung der Folgeverbindungsdatensatzdatei; und
Festlegen der Folgeverbindungsdatensatzdatei;
wobei das Abgleichen der Verarbeitungsschritte für die Verbindungsdatensatzdatei mit der Originalverbindungsdatensatzdateikennung Folgendes umfasst:
Extrahieren der Abgleichparameter der Verbindungsdatensatzdatei vor und nach jedem der Verarbeitungsschritte und Abgleichen zwischen den und innerhalb der Verarbeitungsschritte, um umfassende Abgleichindizes, die angeben, ob die Verarbeitungsschritte ausgeglichen und normal sind, gemäß den Abgleichparametern und arithmetischen Formeln zu berechnen.

2. Verfahren nach Anspruch 1, **dadurch gekennzeichnet, dass** das Extrahieren der Abgleichparameter der Verbindungsdatensatzdatei vor und nach jedem der Verarbeitungsschritte und das Abgleichen zwischen den und innerhalb der Verarbeitungsschritte Folgendes umfasst:
Abgleichen zwischen einem Erfassungsschritt und einem Tarifierungsschritt;
Abgleichen zwischen dem Erfassungsschritt und einem Festlegungsschritt und zwischen dem Tarifierungsschritt und dem Festlegungsschritt;
Abgleichen zwischen dem Tarifierungsschritt und dem Gebührenabrechnungsschritt; Abgleichen des Erfassungsschritts;
Abgleichen des Tarifierungsschritts; und
Abgleichen des Festlegungsschritts.

3. Verfahren nach Anspruch 1, **dadurch gekennzeichnet, dass** es ferner Folgendes umfasst:
Alarmieren und/oder Ausführen einer Fehleranalyse und Fehlerlokalisierung, wenn der Abgleich anomal ist.

4. Verfahren nach Anspruch 1, **dadurch gekennzeichnet, dass** die Originalverbindungsdatensatzdateikennung Folgendes umfasst:
einen Originalverbindungsdatensatzdateinamen oder eine ID des Originalverbindungsdatensatzdateinamens.

5. Vorrichtung zur Dienstverarbeitung in einem Gebührenabrechnungssystem, die Folgendes umfasst:
ein Empfangsmodul (10), das konfiguriert ist, eine Originalverbindungsdatensatzdatei zu empfangen;
ein Kennungsmodul (100), das konfiguriert ist, eine Originalverbindungsdatensatzdateikennung in die Originalverbindungsdatensatzdatei hinzuzufügen, wobei das Kennungsmodul ein Kennungsuntermodul (110) umfasst,
das konfiguriert ist, die Originalverbindungsdatensatzdateikennung in jeden Verbindungsdatensatz der Originalverbindungsdatensatzdatei hinzuzufügen;
ein Verarbeitungsmodul (200), das konfiguriert ist, die eingegebene Verbindungsdatensatzdatei mit der Kennung zu verarbeiten und eine Folgeverbindungsdatensatzdatei mit der Originalverbindungsdatensatzdateikennung auszugeben, wobei jeder Verbindungsdatensatz während der nachfolgenden Verarbeitung die Originalverbindungsdatensatzdateikennung aufweist, und die Verbindungsdatensätze in der empfangenen und verarbeiteten Verbindungsdatensatzdatei durch Zusammenrechnen der Originalverbindungsdatensatzdateikennung zusammenzurechnen, um Abgleichparameter der Verbindungsdatensätze, die die Originalverbindungsdatensatzdateikennung aufweisen, zu spezifizieren;
ein Abgleichmodul (300), das konfiguriert ist, Eingaben und Ausgaben des Verarbeitungsmoduls abzugleichen; und
ein Verfolgungsmodul (400), das konfiguriert ist, die Verbindungsdatensatzdatei mit der Originalverbindungsdatensatzdateikennung zu verfolgen, wenn der Abgleich anomal ist;
wobei das Verarbeitungsmodul Folgendes umfasst:
ein Erfassungsmodul (210), das konfiguriert ist, die Originalverbindungsdatensatzdatei zu erfassen und die Folgeverbindungsdatensatzdatei zu erzeugen;
wobei das Verarbeitungsmodul (200) ferner eines des Folgenden oder eine Kombination davon umfasst:
ein Tarifierungsmodul (220), das konfiguriert ist, die Folgeverbindungsdatensatzdatei zu tarifieren;
ein Gebührenabrechnungsmodul (230), das konfiguriert ist, die tarifierte Verbindungsdatensatzdatei zu empfangen und die Gebühren dazu abzurechnen; und
ein Festlegungsmodul (240), das mit dem Erfassungsmodul, dem Tarifierungsmodul und dem Gebührenabrechnungsmodul gekoppelt ist und konfiguriert ist, die aus den Verarbeitungsmodulen ausgegebene Folgeverbindungsdatensatzdatei festzulegen; und das Abgleichmodul (300) Folgendes umfasst:
ein Abgleichuntermodul (310), das konfiguriert ist, die Abgleichparameter der Eingangs- und Ausgangs-Verbindungsdatensatzdateien der Verarbeitungsmodule zu extrahieren und Abgleich zwischen den und innerhalb der Verarbeitungsmodule auszuführen, um umfassende Abgleichindizes, die angeben, ob die Verarbeitungsschritte in den Verarbeitungsmodulen ausgeglichen und normal sind, gemäß den Abgleichparametern und arithmetischen Formeln zu berechnen.

6. Vorrichtung nach Anspruch 5, **dadurch gekennzeichnet, dass** das Abgleichuntermodul (310) Folgendes umfasst:
ein Inter-Erfassungs-und-Tarifierungs-Abgleichuntermodul (311), das konfiguriert ist, Abgleich zwischen dem Erfassungsmodul (210) und dem Tarifierungsmodul (220) auszuführen;
ein Inter-Erfassungs-Tarifierungs-und-Festlegungs-Abgleichuntermodul (312), das konfiguriert ist, Abgleich zwischen dem Erfassungsmodul (210) und dem Festlegungsmodul auszuführen und Abgleich zwischen dem Tarifierungsmodul und dem Festlegungsmodul (240) auszuführen;
ein Inter-Tarifierungs-und-Gebührenabrechnungs-Abgleichuntermodul (313), das konfiguriert ist, Abgleich zwischen dem Tarifierungsmodul (220) und dem Gebührenabrechnungsmodul (230) auszuführen;
ein Intra-Erfassungs-Abgleichuntermodul (314), das konfiguriert ist, Abgleich innerhalb des Erfassungsmoduls (210) auszuführen;
ein Intra-Tarifierungs-Abgleichuntermodul (315), das konfiguriert ist, Abgleich innerhalb des Tarifierungsmoduls (220) auszuführen; und
ein Intra-Festlegungs-Abgleichuntermodul (316), das konfiguriert ist, Abgleich innerhalb des Festlegungsmoduls (240) auszuführen.

7. Gebührenabrechnungssystem, das eine Vorrichtung nach Anspruch 5 umfasst und ferner Folgendes umfasst:
ein Erfassungsmodul (500), das konfiguriert ist, die Originalverbindungsdatensatzdatei zu erfassen und eine Folgeverbindungsdatensatzdatei zu erzeugen;
ein Tarifierungsmodul (600), das konfiguriert ist, die Folgeverbindungsdatensatzdatei zu tarifieren;
ein Gebührenabrechnungsmodul (700), das konfiguriert ist, die tarifierte Verbindungsdatensatzdatei zu empfangen und Gebühren für die Folgeverbindungsdatensatzdatei abzurechnen;
ein Festlegungsmodul (800), das konfiguriert ist, die aus jedem der Verarbeitungsmodule ausgegebene Folgeverbindungsdatensatzdatei festzulegen.

8. System nach Anspruch 7, **dadurch gekennzeichnet, dass** das Abgleichmodul (920) Folgendes umfasst:
ein Abgleichuntermodul (921), das konfiguriert ist, Abgleichparameter von Eingangs- und Ausgangs-Verbindungsdatensatzdateien der Verarbeitungsmodule zu extrahieren und Abgleich zwischen den und innerhalb der Verarbeitungsmodule auszuführen.

9. System nach Anspruch 8, **dadurch gekennzeichnet, dass** das Abgleichuntermodul (921) Folgendes umfasst:
ein Inter-Erfassungs-und-Tarifierungs-Abgleichuntermodul (9211), das konfiguriert ist, Abgleich zwischen dem Erfassungsmodul und dem Tarifierungsmodul auszuführen;
ein Inter-Erfassungs-Tarifierungs-und-Festlegungs-Abgleichuntermodul (9212), das konfiguriert ist, Abgleich zwischen dem Erfassungsmodul und dem Festlegungsmodul auszuführen und Abgleich zwischen dem Tarifierungsmodul und dem Festlegungsmodul auszuführen;
ein Inter-Erfassungs-und-Gebührenabrechnungs-Abgleichuntermodul (9213), das konfiguriert ist, Abgleich zwischen dem Tarifierungsmodul und dem Gebührenabrechnungsmodul auszuführen;
ein Intra-Erfassungs-Abgleichuntermodul (9214), das konfiguriert ist, Abgleich innerhalb des Erfassungsmoduls auszuführen;
ein Intra-Tarifierungs-Abgleichuntermodul (9215), das konfiguriert ist, Abgleich innerhalb des Tarifierungsmoduls auszuführen; und
ein Intra-Festlegungs-Abgleichuntermodul (9216), das konfiguriert ist, Abgleich innerhalb des Festlegungsmoduls auszuführen.

10. Computerlesbares Medium, das computerausführbare Anweisungen umfasst, die dann, wenn sie ausgeführt werden, Vorgänge Ausführen, die Folgendes umfassen:
Empfangen einer Originalverbindungsdatensatzdatei (S 100);
Hinzufügen einer Originalverbindungsdatensatzdateikennung in jeden Verbindungsdatensatz der Originalverbindungsdatensatzdatei (S200) und Verarbeiten der Originalverbindungsdatensatzdatei, der die Originalverbindungsdatensatzdateikennung hinzugefügt ist, um eine Folgeverbindungsdatensatzdatei zu erzeugen, wobei jeder Verbindungsdatensatz während der nachfolgenden Verarbeitung die Originalverbindungsdatensatzdateikennung aufweist;
Zusammenrechnen durch jedes Verarbeitungsmodul der Verbindungsdatensätze in der empfangenen und verarbeiteten Verbindungsdatensatzdatei durch Zusammenrechnen der Originalverbindungsdatensatzdateikennung, um Abgleichparameter der Verbindungsdatensätze, die die Originalverbindungsdatensatzdateikennung aufweisen, innerhalb des Verarbeitungsmoduls (S300) zu spezifizieren;
Abgleichen der Verarbeitungsschritte für die Verbindungsdatensatzdatei mit der Originalverbindungsdatensatzdateikennung (S400); und
Verfolgen der Verbindungsdatensatzdatei durch die Originalverbindungsdatensatzdateikennung, wenn der Abgleich anomal ist (S500);
wobei das Verarbeiten der Originalverbindungsdatensatzdatei, der die Originalverbindungsdatensatzdateikennung hinzugefügt ist, Folgendes umfasst:
Erfassen der Originalverbindungsdatensatzdatei und Ausführen eines der folgenden Verarbeitungsschritte oder einer Kombination davon:
Tarifierung oder Gebührenerfassung der Folgeverbindungsdatensatzdatei;
Gebührenabrechnung der Folgeverbindungsdatensatzdatei; und
Festlegen der Folgeverbindungsdatensatzdatei;
wobei das Abgleichen der Verarbeitungsschritte für die Verbindungsdatensatzdatei mit der Originalverbindungsdatensatzdateikennung Folgendes umfasst:
Extrahieren der Abgleichparameter der Verbindungsdatensatzdatei vor und nach jedem der Verarbeitungsschritte und Abgleichen zwischen den und innerhalb der Verarbeitungsschritte, um umfassende Abgleichindizes, die angeben, ob die Verarbeitungsschritte ausgeglichen und normal sind, gemäß den Abgleichparametern und arithmetischen Formeln zu berechnen.

## Revendications

1. Procédé de traitement de service dans un système de facturation, comprenant :
la réception d'un fichier d'enregistrements d'appels original (S100) ;
l'ajout d'une identification du fichier d'enregistrements d'appels original dans chaque enregistrement d'appel du fichier d'enregistrements d'appels original (S200) et le traitement du fichier d'enregistrements d'appels original auquel a été ajoutée l'identification du fichier d'enregistrements d'appels original afin de générer un fichier d'enregistrements d'appels suivant, dans lequel chaque enregistrement d'appel possède l'identification du fichier d'enregistrements d'appels original pendant le traitement suivant ;
la totalisation, par chaque module de traitement, des enregistrements d'appels dans le fichier d'enregistrements d'appels reçu et traité par totalisation de l'identification du fichier d'enregistrements d'appels original pour spécifier des paramètres de réconciliation des enregistrements d'appels ayant l'identification du fichier d'enregistrements d'appels original dans le module de traitement (S300) ;
la réconciliation des étapes de traitement pour le fichier d'enregistrements d'appels avec l'identification du fichier d'enregistrements d'appels original (S400) ; et
le suivi du fichier d'enregistrements d'appels à partir de l'identification du fichier d'enregistrements d'appels original lorsque la réconciliation est anormale (S500) ;
dans lequel le traitement du fichier d'enregistrements d'appels original auquel est ajoutée l'identification du fichier d'enregistrements d'appels original comprend :
la collecte du fichier d'enregistrements d'appels original, et l'exécution de l'une des étapes de traitement suivantes ou d'une combinaison de celles-ci ;
l'évaluation ou la tarification du fichier d'enregistrements d'appels suivant ;
la facturation du fichier d'enregistrements d'appels suivant ; et
le règlement du fichier d'enregistrements d'appels suivant ;
dans lequel les étapes de traitement de réconciliation pour le fichier d'enregistrements d'appels avec l'identification du fichier d'enregistrements d'appels original comprennent :
l'extraction des paramètres de réconciliation du fichier d'enregistrements d'appels avant et après chacune des étapes de traitement, et la réconciliation entre et dans les étapes de traitement afin de calculer des indices de réconciliation globaux indiquant si les étapes de traitement sont équilibrées et normales conformément aux paramètres de réconciliation et à des formules arithmétiques.

2. Procédé selon la revendication 1, **caractérisé en ce que** l'extraction des paramètres de réconciliation du fichier d'enregistrements d'appels avant et après chacune des étapes de traitement, et la réconciliation entre et dans les étapes de traitement comprennent :
une réconciliation entre une étape de collecte et une étape d'évaluation ;
une réconciliation entre l'étape de collecte et une étape de règlement et entre l'étape d'évaluation et l'étape de règlement ;
une réconciliation entre l'étape d'évaluation et l'étape de facturation ;
une réconciliation de l'étape de collecte ;
une réconciliation de l'étape d'évaluation ; et
une réconciliation de l'étape de règlement.

3. Procédé selon la revendication 1, **caractérisé en ce qu'**il comprend en outre :
l'émission d'une alarme et/ou l'exécution d'une analyse de défaut et de localisation de défaut lorsque la réconciliation est anormale.

4. Procédé selon la revendication 1, **caractérisé en ce que** l'identification du fichier d'enregistrements d'appels original comprend :
un nom de fichier d'enregistrements d'appels original ou un ID du nom du fichier d'enregistrements d'appels original.

5. Appareil de traitement de service dans un système de facturation, comprenant :
un module de réception (10), configuré pour recevoir un fichier d'enregistrements d'appels original ;
un module d'identification (100), configuré pour ajouter une identification du fichier d'enregistrements d'appels original dans le fichier d'enregistrements d'appels original,
le module d'identification comprenant un sous-module d'identification (110), configuré pour ajouter l'identification du fichier d'enregistrements d'appels original dans chaque enregistrement d'appel du fichier d'enregistrements d'appels original ;
un module de traitement (200), configuré pour traiter le fichier d'enregistrements d'appels fourni en entrée possédant l'identification et fournir en sortie un fichier d'enregistrements d'appels suivant possédant l'identification du fichier d'enregistrements d'appels original, dans lequel chaque enregistrement d'appel possède l'identification du fichier d'enregistrements d'appels original pendant le traitement suivant, et pour totaliser les enregistrements d'appels reçus et traités par totalisation de l'identification du fichier d'enregistrements d'appels original afin de spécifier des paramètres de réconciliation des enregistrements d'appels possédant l'identification du fichier d'enregistrements d'appels original ;
un module de réconciliation (300), configuré pour réconcilier des entrées et des sorties du module de traitement ; et
un module de suivi (400), configuré pour effectuer un suivi du fichier d'enregistrements d'appels possédant l'identification du fichier d'enregistrements d'appels original lorsque la réconciliation est anormale ;
dans lequel le module de traitement comprend :
un module de collecte (210), configuré pour collecter le fichier d'enregistrements d'appels original et générer le fichier d'enregistrements d'appels suivant ;
le module de traitement (200) comprenant en outre l'un ou une combinaison :
d'un module d'évaluation (220), configuré pour évaluer le fichier d'enregistrements d'appels suivant ;
d'un module de facturation (230), configuré pour recevoir et facturer le fichier d'enregistrements d'appels évalué ; et
d'un module de règlement (240) couplé au module de collecte, au module d'évaluation et au module de facturation, configuré pour régler le fichier d'enregistrements d'appels suivant fourni en sortie par les modules de traitement ;
et le module de réconciliation (300) comprend :
un sous-module de réconciliation (310), configuré pour extraire les paramètres de réconciliation des fichiers d'enregistrements d'appels fournis en entrée et en sortie des modules de traitement, et effectuer une réconciliation entre et dans les modules de traitement afin de calculer des indices de réconciliation globaux indiquant si les étapes de traitement exécutées dans les modules de traitement sont équilibrées et normales conformément aux paramètres de réconciliation et à des formules arithmétiques.

6. Appareil selon la revendication 5, **caractérisé en ce que** le sous-module de réconciliation (310) comprend :
un sous-module de réconciliation inter-collecte et évaluation (311), configuré pour exécuter une réconciliation entre le module de collecte (210) et le module d'évaluation (220) ;
un sous-module de réconciliation inter-collecte-évaluation et règlement (312), configuré pour exécuter une réconciliation entre le module de collecte (210) et le module de règlement, et exécuter une réconciliation entre le module d'évaluation et le module de règlement (240) ;
un sous-module de réconciliation inter-évaluation et facturation (313), configuré pour exécuter une réconciliation entre le module d'évaluation (220) et le module de facturation (230) ;
un sous-module de réconciliation intra-collecte (314), configuré pour exécuter une réconciliation dans le module de collecte (210) ;
un sous-module de réconciliation intra-évaluation (315), configuré pour exécuter une réconciliation dans le module d'évaluation (220) ; et
un sous-module de réconciliation intra-règlement (316), configuré pour exécuter une réconciliation dans le module de règlement (240).

7. Système de facturation, comprenant un appareil selon la revendication 5, et comprenant en outre :
un module de collecte (500), configuré pour collecter le fichier d'enregistrements d'appels original et générer un fichier d'enregistrements d'appels suivant ;
un module d'évaluation (600), configuré pour évaluer le fichier d'enregistrements d'appels suivant ;
un module de facturation (700), configuré pour recevoir le fichier d'enregistrements d'appels évalué et facturer le fichier d'enregistrements d'appels suivant ;
un module de règlement (800), configuré pour régler le fichier d'enregistrements d'appels suivant fourni en sortie par chacun des modules de traitement.

8. Système selon la revendication 7, **caractérisé en ce que** le module de réconciliation (920) comprend :
un sous-module de réconciliation (921), configuré pour extraire des paramètres de réconciliation des fichiers d'enregistrements d'appels fournis en entrée et en sortie des modules de traitement, et exécuter une réconciliation entre et dans les modules de traitement.

9. Système selon la revendication 8, **caractérisé en ce que** le sous-module de réconciliation (921) comprend :
un sous-module de réconciliation inter-collecte et évaluation (9211), configuré pour exécuter une réconciliation entre le module de collecte et le module d'évaluation ;
un sous-module de réconciliation inter-collecte-évaluation et règlement (9212), configuré pour exécuter une réconciliation entre le module de collecte et le module de règlement, et exécuter une réconciliation entre le module d'évaluation et le module de règlement ;
un sous-module de réconciliation inter-collecte-évaluation et facturation (9213), configuré pour exécuter une réconciliation entre le module d'évaluation et le module de facturation ;
un sous-module de réconciliation intra-collecte (9214), configuré pour exécuter une réconciliation dans le module de collecte ;
un sous-module de réconciliation intra-évaluation (9215), configuré pour exécuter une réconciliation dans le module d'évaluation ; et
un sous-module de réconciliation intra-règlement (9216), configuré pour exécuter une réconciliation dans le module de règlement.

10. Support lisible par ordinateur, comprenant des instructions exécutables par ordinateur qui, lorsqu'elles sont exécutées, effectuent des actions comprenant :
la réception d'un fichier d'enregistrements d'appels original (S100) ;
l'ajout d'une identification du fichier d'enregistrements d'appels original dans chaque enregistrement d'appel du fichier d'enregistrements d'appels original (S200) et le traitement du fichier d'enregistrements d'appels original auquel a été ajoutée l'identification du fichier d'enregistrements d'appels original afin de générer un fichier d'enregistrements d'appels suivant, dans lequel chaque enregistrement d'appel possède l'identification du fichier d'enregistrements d'appels original pendant le traitement suivant ;
la totalisation, par chaque module de traitement, des enregistrements d'appels dans le fichier d'enregistrements d'appels reçu et traité par totalisation de l'identification du fichier d'enregistrements d'appels original pour spécifier des paramètres de réconciliation des enregistrements d'appels ayant l'identification du fichier d'enregistrements d'appels original dans le module de traitement (S300) ;
la réconciliation des étapes de traitement pour le fichier d'enregistrements d'appels avec l'identification du fichier d'enregistrements d'appels original (S400) ; et
le suivi du fichier d'enregistrements d'appels à partir de l'identification du fichier d'enregistrements d'appels original lorsque la réconciliation est anormale (S500) ;
dans lequel le traitement du fichier d'enregistrements d'appels original auquel est ajoutée l'identification du fichier d'enregistrements d'appels original comprend :
la collecte du fichier d'enregistrements d'appels original, et l'exécution de l'une des étapes de traitement suivantes ou d'une combinaison de celles-ci :
l'évaluation ou la tarification du fichier d'enregistrements d'appels suivant ;
la facturation fichier d'enregistrements d'appels suivant ; et
le règlement du fichier d'enregistrements d'appels suivant ;
dans lequel les étapes de traitement de réconciliation pour le fichier d'enregistrements d'appels avec l'identification du fichier d'enregistrements d'appels original comprennent :
l'extraction des paramètres de réconciliation du fichier d'enregistrements d'appels avant et après chacune des étapes de traitement, et la réconciliation entre et dans les étapes de traitement afin de calculer des indices de réconciliation globaux indiquant si les étapes de traitement sont équilibrées et normales conformément aux paramètres de réconciliation et à des formules arithmétiques.
